# EUROPEAN PATENT APPLICATION

(11) **EP 1 834 684 A1**
(43) Date of publication of application: **19.09.2007**
(21) Application number: 07110522.5
(22) Date of filing: 23.12.2003
(51) Int. Cl.: B01D 39/20, C04B 35/10

(54) **Improved fine pore media and method of making same**

(30) Priority: 09.05.2003 US 469278 P; 11.07.2003 US 486402 P; 02.09.2003 US 499538 P
(62) Divisional of application: 03817043.7
(71) Applicant: Porvair, PLC, King's Lynn, Norfolk PE30 2HS (GB)
(72) Inventor: Olson, Rudolph, A., III, Hendersonville, NC 28791 (US); Steppe, Patricia, K., Hendersonville, NC 28792 (US)
(74) Representative: Helbing, Jörg

(57) **Abstract**

A filter for filtering impurities from molten metal. The filter comprises ceramic and the filter has a density of less than 10% of the theoretical density for a ceramic material of the same size and a compressive yield stress of at least 1.41 kg/cm² (20psi).

## Description

### BACKGROUND OF THE INVENTION

The present invention relates to an improved fine pore media particularly suitable for filtering molten aluminium and to a process for manufacturing the media. More specifically, the present invention relates to an improved high porosity, open cell ceramic filter element. The high porosity, open cell ceramic filter exhibits a strength and porosity previously unavailable in the art under reasonable manufacturing conditions. The improved filter is eminently suitable in filtering applications typically requiring packed bed systems.

Filtration of molten aluminium is a widely practiced art. It is imperative to remove impurities, particularly solid impurities, from molten aluminium prior to formation of a cast element. The impurities are typically liquid salt droplets or solid particles such as oxides. The impurities may be attached to, or encapsulated in, liquid salts.

A widely accepted method of filtration involves the use of a packed bed wherein refractory materials having a high void fraction and high specific surface area are packed in layers through which the molten aluminum passes. The refractory materials are typically in the form of alumina balls, Interloc saddles, Raschig rings, or similar forms which allow contacting surfaces with voids there between. Packed bed filtration is highly successful in the market place due, in part, to the filtration efficiency. A deficiency of packed bed filters is the difficulty associated with removing the refractory materials from the column.

Packed bed filters are difficult to regenerate. This is a minor problem when only large volumes of a single aluminium alloy are to be filtered. When it is desirable to change alloys, the packed bed filters must be changed, which is detrimental to production efficiency. Removing, and repacking, a packed bed filter is time consuming and expensive. Removing a large number of small particles contaminated with metal is time consuming. The required re-melting and processing of the metal trapped in the filter elements is a further inconvenience. The effort and expense associated with regeneration of a packed bed filter virtually eliminates the ability of rapid change between alloys.

Ceramic foam filters are superior to packed bed filters with regard to production efficiency. They can be easily removed and replaced without the problems common to packed bed filters. Due to the low cost, relative to packed bed filters, ceramic filters can be discarded after use thereby eliminating the need for regeneration except as necessary to recover metal. Ceramic foam filters have deficiencies which previously eliminated their consideration as replacements for packed bed filters. To achieve the filtration capabilities of packed bed filters a ceramic filter must have a very fine pore structure, likely in excess of 60 pores per inch (ppi) to as fine as 150 pores per inch. In order to achieve an acceptably high permeability for adequate metal priming and flow, the fine pore structure must be sufficiently open and have a relatively high porosity. Ceramic open cell filters with relatively high porosity typically lack the strength necessary to withstand the mechanical and thermal stress of the aluminium filtration process.

Another problem is that these filters must also run for a relatively long period of time to match the filtration efficiency of a deep bed filter. Phosphate-bonded or silica-bonded alumina filters (i.e. glass-bonded alumina) break down and degrade after several hours due to attack by aluminum and other alloying agents, especially magnesium. Attack by magnesium is extremely detrimental and quickly speeds the corrosion process. The metal attacks the glass matrix and the filter begins to release particles. Sintered alumina is much more resistant to metal attack, but it is difficult to manufacture filters of appropriate size for primary metal filtration (typically 15-26" square by about 2" thick).

Ceramic open cell filters are formed by impregnation of a polymeric foam by a slurry such as phosphate bonded alumina slurry or silica bonded alumina slurry. The slurry is forced into the voids of the polymeric foam and dried as known in the art. The polymeric foam is vaporized and the slurry is fired to form a ceramic near negative replica of the polymeric foam resulting in an exoskeleton-like foam structure. The voids within the ceramic struts correspond to the space originally occupied by the precursor polymer foam. This technique is also referred to in the art as sponge replication.

Slurries typically break down at high shear stress such as when entering and exiting very fine porosity (200-500 microns) orifices. When the slurry breaks down the repulsive forces keeping the particles in suspension are overcome, thereby causing the particles to be forced into close proximity. The fluid between particles is then expressed causing the particles to coalesce. At coalescence, the slurry is no longer a uniform suspension of ceramic particles and often ceases to flow like a fluid. If the slurry breaks down at the surface of a monolithic piece of polymeric foam, due to high stress, the slurry does not adequately penetrate the foam. Poorly penetrated foam yields a ceramic structure with a density gradient wherein the density is higher towards the exterior and lower towards the interior. These structures are not acceptable due to weakness and poor filtration.

To alleviate this problem, the thixotropy of the slurry can be improved to decrease the shear stress at a high shear rate. One method of doing this is to reduce the particle size of the slurry. Another method is to reduce the size of the largest particles in the slurry. Another way to alleviate the problem is to improve the strength of the repulsive forces between particles, or in other words, to improve the stability of the suspension. One method of doing this is to employ an electrolytic, stearic, or polyelectrolytic dispersant, the molecules of which resides at the interface of the ceramic particle and aqueous or non-aqueous medium suspending the particle and acts to increase the repulsive force separating the particles. Another method is to change the pH of the system to increase the repulsive force separating the particles.

When the size of the particles in a suspension approaches the size of an orifice through which the suspension is flowing, the slurry can become dilatent because the largest particles within the slurry begin to interact with each other and with the walls of the orifice through which the slurry is passing, thereby drastically increasing shear stress and inhibiting the flow of the slurry. This effect is known in ceramic science as "Dilatency Hardening." This effect might be observed when the largest particles within a suspension equal or exceed about one-tenth the size of the orifice through which the suspension is flowing.

The flexible polymeric foam commonly used to manufacture ceramic foam is a hydrophobic form of polyurethane meaning water has a wetting angle of greater than 90° and it does not tend to spread out over the surface of the polyurethane. Given that the slurries used to manufacture ceramic foam are typically water based, these slurries do not effectively wet the surface of the polyurethane. This may lead to poor spreading of the slurry over the surface of the polyurethane and poor resultant strut formation. Because the slurry does not wet the organic foam, it takes more applied pressure to force the slurry through the pores of the organic foam than if it did wet the surface.

When an alumina article is sintered, it typically shrinks about 10-16%. When it shrinks, frictional forces are generated between the article and the setter upon which it is fired, and these forces will tear the article apart if they exceed the cohesive strength of the ceramic. To reduce these frictional forces, the article may be fired on alumina setter tape, because the tape also shrinks, reducing the shrinkage difference between article and setter. Unfortunately, the rate of shrinkage of the setter tape (i.e. shrinkage as a function of temperature and time) is never exactly that of the ceramic foam, so the shrinkage difference between article and tape is never perfect. Another way of further reducing these frictional forces is to reduce the weight of the ceramic foam itself, thereby decreasing the normal force, which generates the frictional force. The caveat is that as the weight of the ceramic foam is decreased, the density and correspondingly the yield strength is decreased. Thus, both the frictional force and the yield strength of the ceramic foam are reduced as density is reduced, so there is no considerable advantage gained by simply reducing the density; the lower frictional force may still exceed the lower yield strength and the part still has a chance of tearing. If the density could be reduced without sacrificing yield strength, a significant advantage would be gained, as the frictional force would be reduced without lowering the yield strength, and a larger part could be manufactured.
The present invention provides a high porosity, open cell ceramic filter with a low density, a fine pore structure, and sufficient strength for use in aluminium filtration.

### BRIEF SUMMARY OF THE INVENTION

It is object of the present invention to provide an improved open cell fine pore media with sufficient strength, finer porosity and more open porosity eminently suitable for use in filtering aluminium.

It is another object of the present invention to provide a process for manufacturing a ceramic foam filter which yields a filter with a low density of less than about 10% of the theoretical density and a pore size equal to or less than 60 ppi, while maintaining a compressive stress of at least about 20 psi.

A particular feature is the ability to select a low density filter at a suitable strength or a high strength filter at a higher density.

Another particular feature is the low cost of manufacture and use relative to packed bed filtration devices.

This hurdle as been overcome by a slurry composition, and process, that are capable of generating a sintered alumina part that is less susceptible to tearing when fired due to the exceptional strength at relatively low density.

The invention involves improving the rheological characteristics of a ceramic slurry such that it behaves well when entering and exiting the polyurethane foam, i.e. the slurry does not breakdown due to high shear stress. It also involves improving the wetting characteristics of the slurry such that it better wets the surface of polyurethane.

These and other advantages, as would be realised to one of ordinary skill in the art, are provided in a filter for filtering impurities from molten metal. The filter comprises ceramic and the filter has a density of less than 10% of the theoretical density for a ceramic material of the same size and a compressive yield stress of at least 20 psi.

Another embodiment is provided in an open cell ceramic filter for filtering molten metal prepared by the process of:
a) forming a slurry comprising solvent, alumina and at least 0.01 wt % surfactant wherein the slurry has sufficiently low shear stress at high shear rates of less than 12,000 dynes/cm² at a shear rate of 500/sec such that it can enter polymeric foam with pore size equal to or less than 60 ppi ;
b) impregnating a polymeric foam with the slurry to form an impregnated foam;
c) drying the impregnated foam to form a dry impregnated foam;
d) heating the dry impregnated foam to remove the polymeric foam thereby forming a green ceramic; and
e) heating the green ceramic to form the open cell ceramic filter.

### BRIEF DESCRIPTION OF THE DRAWINGS

Fig. 1 is a plot representing the rheology of phosphate bonded alumina slurry made from large (A2) and small (A3000) alumina particles.

Fig. 2 is an electronmicrograph of a cross-sectional view of a comparative sample.

Fig. 3 is an electronmicrograph of a cross-sectional view of an inventive example demonstrating the invention.

Fig. 4 is a graph demonstrating the advantages provided by the present invention.

Fig. 5 is an electronmicrograph of a cross-sectional view of an inventive example using quenched foam.

Fig. 6 is an electronmicrograph of a cross-sectional view of an inventive example using quenched foam.

Fig. 7 is an electronmicrograph of a cross-sectional view of an inventive example using zapped foam.

Fig. 8 is an electronmicrograph of a cross-sectional view of an inventive example using zapped foam.

### DETAILED DESCRIPTION OF THE INVENTION

The inventors of the present application have developed, through diligent research, a high porosity ceramic foam filter with improved strength, fine porosity, and a process for manufacturing the improved filter.

In preparing a ceramic filter, foam is impregnated with ceramic slurry. The ceramic slurry is then dried, the foam is vaporized and the ceramic is sintered. The process for forming a ceramic filter is provided in U.S. Patent Nos. 4,056,586; 5,456,833 and 5,673,902.

Polyurethane foam is non-reticulated in its virgin state, i.e. the windows between cells are closed off with a thin wall of polyurethane. To reticulate the foam, these windows must be removed. There are two common ways of reticulating polyurethane foam: zapping and quenching.

With zapping a large bun of non-reticulated polyurethane foam is inserted into a pressure chamber. The chamber is evacuated, and then hydrogen and oxygen are bled back into the chamber. The gas mixture is ignited, and the flame front propagates through the foam, blowing out the windows and wrapping them around the struts in the process. The foam has a fire-polished finish, tends to retain its original compliance and stiffness, and is still inherently hydrophobic. The surface of the foam at the microscopic level has a relatively smooth appearance.

With quenching a large bun of non-reticulated polyurethane foam is inserted into a bath of warm, sodium hydroxide solution. After it is submerged, it is passed through rollers to express the solution. This step is repeated twice, and then the bun is washed and rung twice. At some point in the process, the bun is beaten to knock residual windows out of the foam matrix. After thorough rinsing, the bun is dried to remove residual water. The foam has a dull finish, tends to be softer and less compliant than when it entered the quench solution, and its hydrophilicity is enhanced. The surface of the foam at the microscopic level has an etched appearance.

Comparison of sintered alumina foam made using either quenched or zapped foam, displays considerable differences at the microscopic level.

The slurry employed depends on the desired ceramic material for the chosen metal to be filtered. One must have sufficient properties in the final product to stand up to the particular molten metal with respect to chemical attack and sufficient structural and/or mechanical strength to stand up to the particular elevated temperature conditions. In addition, the slurry should have a relatively high degree of fluidity and be comprised of an aqueous suspension of the ceramic intended for use in the filter. Typical ceramic materials, which can be employed, include alumina, chromia, zirconia, magnesia, titanium dioxide, silica, silicon carbide and mixtures thereof. For use with molten aluminium and its alloys, the alumina-based slurry, bonded by phosphate and/or silicate, is quite satisfactory. In cases where the filter must run for a very long period of time, or the magnesium content of an alloy is relatively high, it may be necessary to employ a sintered alumina filter. Normally, the slurry contains from about 10 to about 40%, by weight, water. Additives, such as binders, may be employed in the slurry.

The flexible foam material is then impregnated with the aqueous ceramic slurry so that the fiber-like webs are coated therewith and the voids are filled therewith. Normally, it is preferred to repeatedly immerse the foam in the slurry and compress the foam between immersions to insure complete impregnation of the foam.

The impregnated foam is compressed to expel from 25 to 75% of the slurry while leaving the fiber-like web portion coated therewith. In a continuous operation, one may pass the impregnated foam through a preset roller to affect the desired expulsion of slurry from the foam and leave the desired amount impregnated therein. This may be done manually by simply squeezing the flexible foam material to the desired extent. At this stage, the foam is still flexible and may be formed into configurations suitable for specific filtration task, i.e., into curved plates, hollow cylinders, etc. It is necessary to hold the formed foam in position by conventional means until the polymeric substrate is decomposed, or preferably until the ceramic is sintered. The impregnated foam is then dried by either air drying or accelerated drying at a temperature of from 35° to 700°C for from 15 minutes to 6 hours. Air drying may be achieved in from 8 to 24 hours. After drying, the material is heated at an elevated temperature to bond the ceramic particles making up the fiber-like webs. It is preferred to heat the dried impregnated material in two stages, with the first stage being to heat to a temperature of from 350° to 700°C and hold within this temperature range for from 15 minutes to 6 hours in order to burn off or volatilize the web of flexible foam. Clearly this step can be part of the drying cycle, if desired. The second stage is to heat to a temperature of from 900° to 1700°C and hold within that temperature range for from 15 minutes to 10 hours in order to bond the ceramic. The resulting product is a fused ceramic foam having an open cell structure characterized by a plurality of interconnected voids surrounded by a web of the ceramic. The ceramic foam may have any desired configuration based on the configuration needed for the particular molten metal filtration process.

The process for forming the inventive filter comprises forming a slurry of ceramic precursors. Ceramic precursors are known in the art to include alumina, including phosphate bonded alumina slurry. The slurry comprises a surfactant to decrease the surface tension of the aqueous phase to below 80 mN/m for improved wetting characteristics. More preferably, the surfactant decreases the surface tension of the aqueous phase to below 30 mN/m. The slurry also uses a relatively fine particle size alumina to keep the shear stress below 12,000 dyne/cm² measured at a shear rate of 500/sec. More preferably the slurry uses a relatively fine particle size alumina to keep the shear stress below 8,000 dyne/cm² measured at a shear rate of 500/sec.

Surfactants suitable for achieving the necessary reduction in surface tension are limited. One particularly preferred surfactant comprises a compound represented by Formula I: 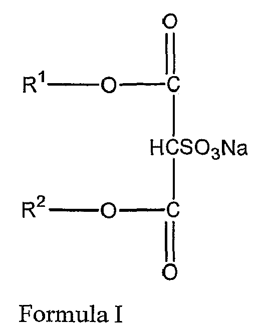 wherein R¹ and R² independently represent an alkyl of 1-8 carbons with the proviso that the average number of carbons in R¹ and R² combined does not exceed 15. When each alkyl group comprises 8 carbons, for a total of 16, the surfactant does not effectively lower the surface tension to form the inventive filter. In a particularly preferred embodiment, the surfactant comprises a blend of surfactants of Formula I wherein the average number of carbons in R¹ and R² combined does not exceed 14. Most preferably, the surfactant comprises a blend of surfactants of Formula I wherein the average number of carbons in R¹ and R² combined does not exceed 13.

The pH of phosphate bonded alumina is typically controlled with phosphoric acid. Phosphoric acid allows a wide latitude of surfactant selection within the invention. With sintered alumina, nitric acid is typically employed to maintain a low pH, such as about 1-2. It is known in the art that low pH nitric acid solutions react in a detrimental manner with certain surfactants. Care must be taken to select surfactants, in accordance with the teachings herein, which do not react, or cause coagulation, in low pH nitric acid solutions.

The amount of surfactant of Formula I added to the slurry is preferably at least about 0.01 wt%. Below about 0.01 wt%, the advantages diminish below that suitable for demonstration of the present invention. It is more preferable that the surfactant be added in an amount of at least about 0.05 wt%, more preferably, 0.07 wt%, even more preferably about 0.10 wt% and most preferably about 0.20 wt%. It is most preferred that no more than about 1 wt% be added to the slurry since above about 1 wt% the additional benefits are minimal and the additional expense is not warranted. More preferably, the surfactant is added in an amount of no more than about 0.5 wt% and most preferably no more than about 0.35 wt%.

The ceramic filter is preferably phosphate-bonded alumina or sintered alumina. The ceramic filter is characterized by the improved strength obtained by the improved process. The preferred inventive ceramic filter has a density of less than about 10% of the theoretical density for a ceramic material of the same size and a compressive yield stress of at least about 20 psi. More preferably, the compressive yield stress is at least about 40 psi. Even more preferably, the compressive yield stress is at least 60 psi. Most preferably, the compressive yield stress is at least about 80 psi. Conventional filters, with comparable yield stress, have a density of at least about 10% of the theoretical density for a ceramic material of the same size. Obtaining a compressive yield stress above about 20 psi at densities below about 10% of the theoretical density is not obtainable at a reasonable manufacturing cost. More preferably the inventive ceramic filter has a density of no more than about 8% of the theoretical density for a ceramic material of the same size and most preferably the inventive ceramic filter has a density of no more than 6% of the theoretical density for a ceramic material of the same size.

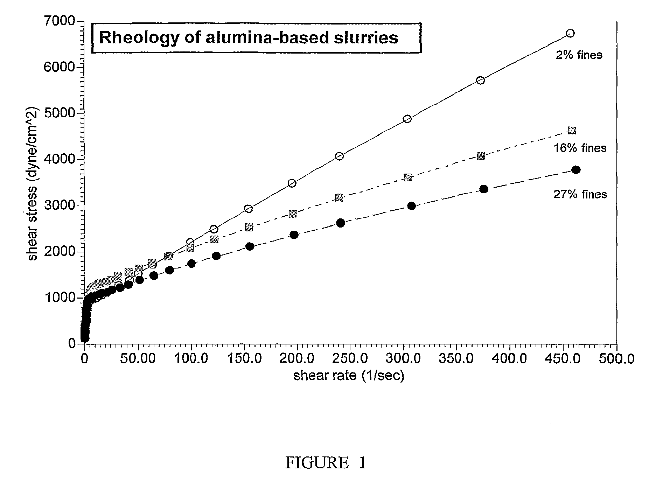

Most commercially available ceramic foam for use in molten aluminum filtration is typically generated using alumina powder having an average particle size of about 10 microns and a relatively broad particle size distribution, as exemplified by A2 from Alcoa, where the largest particles in the distribution are typically between about 50-100 microns. Given that a 60 ppi polyurethane foam is equivalent to an average pore size of approximately 423 microns, use of a suspension containing A2 powder to impregnate a foam having a pore size of 60 ppi or finer might expect to experience dilatency hardening because the ratio of large particles to orifice is greater than one tenth. The use of finer powder, such as A-3000 grade from Alcoa having an average particle size of about 4 microns and largest particles typically less than 50 microns, enhances impregnation of finer pore foam because it reduces the chance of dilatency hardening and reduces the shear stress of slurry at high shear rate. The latter is demonstrated in Fig. 1.

Fig. 1 displays rheology curves for three slightly different ceramic slurries (a suspension of ceramic particles in solution). The rheology of a suspension of particles can be characterized by the shear stress and how it changes as a function of shear rate. The suspensions represented above are primarily composed of alumina in water containing over 20% monoaluminum phosphate solution by weight. This makes a strongly acidic slurry, with a pH between 1 and 2, and helps to stabilize and suspend the alumina particles in the aqueous medium. The curves in Fig. I primarily differ in the amount of course and fine alumina used in the slurry. The course fraction has an average size of about 10 microns and the fine fraction between 1-2 microns. The curve represented by open circles has 2% fines and the balance of 98% course particles. The filled squares have 16% fines and 84% course. The filled circles have 27% fines and 73% course. Note that as the ratio of course to fine particles decreases, the shear stress at higher shear rate decreases. While not restricted to any theory, this may be due to better particle packing characteristics, as the smaller particles tend to fit between the interstices of the large particles and aid flow.

Impregnation of fine pore, polyurethane foam with this type of slurry is thought to be accompanied by relatively high shear rates and high shear stress, the smaller the pore, the higher the shear rate and the higher the shear stress. This is evident when one tries to impregnate fine pore foam with slurry containing relatively large particles. The slurry tends to concentrate at the outer edges of the foam and very little penetrates the interior. A cross-section of the resulting foam has an appearance of an ice cream sandwich, with a relatively high-density skin on the outside and a low-density interior. The dense concentration of slurry arises because it ceases to flow when forced into the polyurethane foam.

A particularly preferred ceramic filter has a density of less than 12% of the theoretical density for a ceramic material of the same size and compressive yield stress of greater than 90 psi. More preferably, the ceramic filter has compressive yield stress of at least 100 psi. Even more preferably, the ceramic filter has compressive yield stress of at least 120 psi and most preferably at least 140 psi.

In use, the filters of the present invention are placed in a filter assembly as well known in the art. In a particularly preferred embodiment, the shape of the filter corresponds with the shape of a packed bed column and the filter is simply placed in the column in lieu of the packed beads. Molten metal, preferably aluminium, is then passed through the filter and impurities are collected in the pores of the filter as well known in the art.

### EXAMPLES

### Comparative Example 1

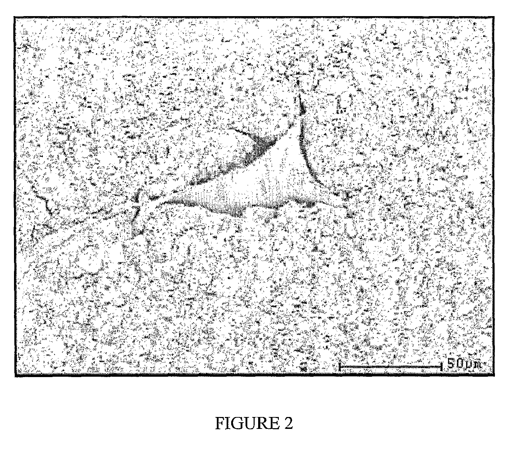

Polyurethane foam from Foam Design was saturated with phosphate bonded alumina slurry comprising colloidal clay, monoaluminum phosphate solution, A-3000 grade alumina, water and surfactant. The slurry was dried at about 300°F for 30 minutes. A cross-sectional view was taken with a scanning electron microscope and the image reproduced as Fig. 2.

### Inventive Example 2

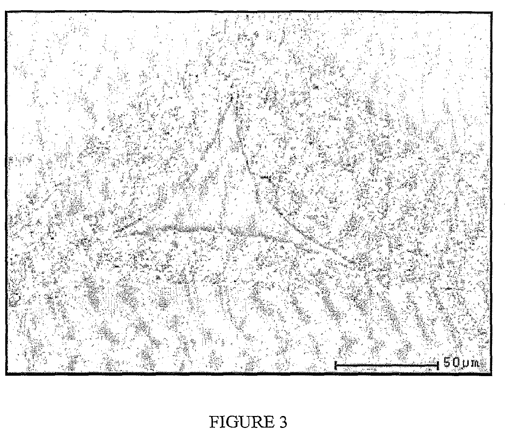

Comparative Example 1 was reproduced with the exception of the incorporation into the slurry of 0.33 wt% a sulfosuccinate-based surfactant blend of Formula I comprising an average molecular weight of about 400 corresponding to an average of about 13 total carbons for R¹ and R² combined. The surfactant is available as AEROSOL®LF-4 surfactant from Cytec Industries, Inc. The foam was saturated with the slurry, the slurry dried and a cross-sectional view taken with a scanning electron micrograph. The image is reproduced as Fig. 3.

A comparison of Fig. 2 and Fig. 3 illustrates the advantages of the present invention. In Fig. 2, the dried slurry coats the polyurethane, yet a gap, or considerably large voids, are visible between the interface of the polyurethane substrate and the slurry. As would be realized, the gap between the foam and slurry indicates poor wetting of the foam, which would result in a weak final ceramic product due to poor or incomplete strut formation. In the inventive sample illustrated in Fig. 3, the slurry better coats the polyurethane, eliminating any gap between the dried slurry and foam, optimising the formation of struts. The improved penetration greatly facilitates the formation of struts thereby strengthening the overall lattice as will be demonstrated in further examples. The surfactant enhances the ability of the slurry to coat the hydrophobic polyurethane, improve its coverage, and ultimately generates more robust struts.

### Examples 3-8

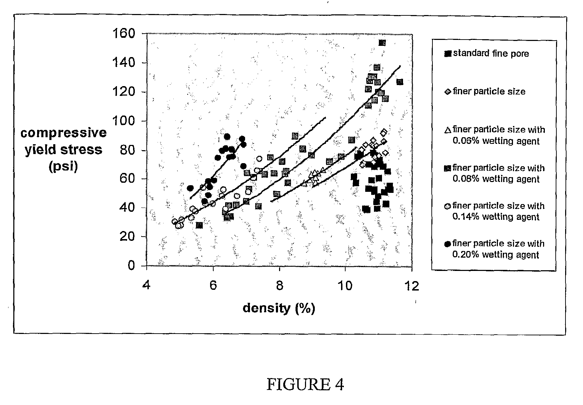

Comparative Example 1 was reproduced with foam comprising a pore size of 70 ppi. Comparative Example 3 was a conventional slurry and Examples 4-8 used a finer size alumina. Examples 5-8 were done with varying amounts of AEROSOL® LF-4 surfactant. Example 5 comprised about 0.06 wt % surfactant, Example 6 comprised about 0.08 wt % surfactant, Example 7 comprised about 0.14 wt% surfactant and Example 8 comprised about 0.20 wt % surfactant. In each case the slurry was dried, the foam was vaporized and the ceramic fired to form an open cell ceramic foam. In each case, the density was measured and reported versus the theoretical density for a ceramic material of the same size by measuring the dimensions of a part having approximate dimensions of 3.25"x3.25"x2" (8.255 x 8.255 x 5.08 cm) and measuring the mass using a mass balance to determine density. The measured density is divided by the theoretical density of approximately 3.689g/ml and the ratio reported as a percent of theoretical density or density (%). The compressive yield stress was measured by cutting approximately 3.25"x3.25"x2" (8.255 x 8.255 x 5.08 cm) parallelpipeds from a larger blank. The parallelpiped is then crushed using an Instron, Model 4206 equipped with Series IX software such that the cross-sectional area equalled 6.5 in² (272.58 cm²). Compliant pads consisting of fiberous gasket material were used on the top and bottom surfaces to ensure relatively even distribution of load. The results of multiple replications are presented graphically in Fig. 4. Compressive strengths have been increased by as much as 200% at a particular density, as shown in Figure 4. The results are for individual samples cut from different blanks made from the same slurry and processed under the same conditions. Comparative Example 3 has a density of at least approximately 10% while compressive yield stress does not exceed about 80 psi. Utilizing a finer particle size alumina, in Example 4, provides a minor increase in compressive yield stress, yet the density is still above about 10%. Example 5, with about 0.06 wt% surfactant demonstrates an approximately 20% decrease in density at an equivalent compressive yield stress as Example 3. As the amount of surfactant increases, the obtained density is decreased at comparable compressed yield stress levels. Alternatively, the compressive yield stress can be greatly increased at comparable density. A comparison of comparative Example 3 with Inventive Example 6, at equivalent density demonstrates an increase in compressive yield stress of approximately 100%. Achieving this magnitude of strength increase at low density levels, as illustrated, represents a significant accomplishment in the art.

These improvements have allowed density reduction of the foam to enhance the openness of the pore structure and increase permeability, yet have strength equal to or higher than that of the standard product at a higher density. The particular surfactant used in these experiments with our standard phosphate bonded alumina material was an anionic, proprietary sulfosuccinate blend from Cytec. Another surfactant used in a sintered alumina formulation that worked well was Surfynol 104E from Air Products. Other types of surfactants, of which there are many, could potentially perform better in this system, or be applied to other materials such as silica-bonded materials and different types of sintered products, including zirconia and mullite.

Another potential benefit of this technology is to reduce the cost of the filter by decreasing its density, possibly 30% or more, while still producing a filter with strength equal to that on the market today.

The permeability of these filters at relatively low densities is significantly higher, as evidenced from pressure drop data. Pressure drop was measured using an apparatus designed to measure the resistance to the flow of air at a set velocity through the filter. The equipment consists of a vertical tube, 4" (10.16 cm) in diameter, with a 10" (25.4 cm) diameter gasket at the top. The gasket face is at right angles to the axis of the tube. The filter is centered on the gasket with the large face downward. Air flows up through the tube at a fixed velocity of 285 ft/min (85.5 m/min) plus or minus 10 ft/min (8.55 m/min). The differential pressure of air passing through the filter is measured and used as an indicator of permeability. Sixty-eight standard, 70 ppi, commercial, phosphate-bonded alumina filters sold by SELEE between October 2002 and April 2003 had an average pressure drop of 3.93 in/water (9.9822 cm/water) with a standard deviation of 0.41 (1). The average density of these filters was 11.5% with a standard deviation of 0.6. Eight experimental 70 ppi phosphate-bonded alumina filters made using the art described above, having an average density of 6.95% and a surfactant content of 0.2%, had an average pressure drop of 2.19 in/water (5.56 cm/water) with a standard deviation of 0.37 (0.94). Performing a T-test on these two averages generates a value of 11.4, which confirms it to be a highly significant difference.

### Examples 9-11

Three solutions mimicking the aqueous phase of a slurry were prepared similar to Examples 3-8 with surfactants, and levels, as indicated in Table 1. Inventive Example 9 used surfactant 1 which was AEROSOL®LF-4. Comparative Example 10 used surfactant 2 which was sodium dioctyl sulfosuccinate available from Cytec Industries, Inc. as AEROSOL®OT-75. Sodium dioctyl sulfosuccinate has the same chemical formula as Formula I with the exception of the R groups which both have 8 carbons. Comparative Example 11 used surfactant 3, which was sodium lauryl sulfate, a widely known and used surfactant in the industry as a wetting agent and surfactant. The results are presented in Table 1.

**Table 1:**

| **Example** | **Surfactant** | **Amount** | **Test results** |
|---|---|---|---|
| Inv.9 | 1 | 0.0008wt% | Entered Solution with Low Foam |
| Comp. 10 | 2 | 0.0008wt% | Precipitated |
| Comp. 11 | 3 | 0.001wt% | Entered solution but foamed badly |

The results in Table 1 indicated that inventive sample 9 is superior to comparative examples 10 and 11.

AEROSOL®LF-4 does not perform well in slurry used to make sintered alumina foam, as the slurry gels when the surfactant is added. This slurry is pH buffered using nitric acid instead of phosphoric acid. SURFYNOL®104E from Air Products is preferred for manufacture of sintered alumina foam. Surfynol 104E, a proprietary surfactant composition from Air Products worked well with sintered alumina.

A particular advantage is provided in the ability to select either a high strength at conventional densities or a conventional strength at low densities.
Eight large-sized filters of different densities were fired to 1565°C and held for four hours. Final fired dimensions of each filter was approximately 13.75 x 17 x 1.75" (34.925 x 43.18 x 4.445 cm). Shrinkage was about 10% for all filters. Results are presented in Table 2 below ranking highest to lowest density.

**Table 2:**

| **DENSITY (g/cc)** | **CHARACTERISTICS** |
|---|---|
| 13.43 | Massive cracking |
| 12.81 | Massive cracking |
| 12.81 | Slight cracking |
| 12.44 | No cracking observed |
| 12.33 | Slight cracking |
| 11.96 | No cracking observed |
| 11.87 | Very slight cracking |
| 11.71 | Very slight cracking |

About three-dozen parts of size 21 x 21" (53.34 x 53.34 cm) square and density of 7-9% fired under the same conditions have no cracking observed. It is apparent that density plays an important role when trying to manufacture large ceramic foam parts.

Sintered alumina ceramic foam parts of dimensions up to 15 x 15 x 1.5" (38.1 x 38.1 x 2.81 cm) are relatively common commercially, but parts much larger than this size are relatively uncommon. Parts very much larger than this dimension have been commercially impossible to this point. To make parts much larger than dimensions 15 x 15 x 1.5" (38.1 x 38.1 x 3.81 cm), it was necessary to employ sacrificial setter materials in a novel way to reduce cracks caused by frictional forces generated by shrinkage and drag. This was accomplished using alumina setter tape from Saxonburg (Charlotte, NC). It is very important that the setter tape remain intact during firing. Alumina setter tape received from Saxonburg is typically about 6" (15.24 cm) wide and 0.020" (0.051 cm) thick. One layer of setter tape placed beneath the part is not robust enough to survive the shrinkage stresses generated during firing. A single layer of setter tape between the ceramic foam and the setter plate (typically recrystallized silicon carbide) frequently cracks and separates. Two layers of setter tape, constructed by running strips perpendicular to each other in each layer, typically experience smaller cracks that occur less frequently, and three layers crack very infrequently and the cracks are typically very short with insignificant length. Using three layers of setter tape between the part and the setter plate seem to improve the probability of obtaining a good large-sized sintered alumina part. Also, using less layers of thicker setter tape also improves the probability of making a crack-free part, such as using two layers of 0.030" (0.076 cm) or 0.040" (0.10 cm) thick tape. The thicker tape appears to have a better chance of holding itself together, thus enabling the use of less layers. Using these methods a filter can be made in sizes as large as 76.2 cm in either dimension and as thick as 7.62 cm. This provides a range of large filters from above 38.1 cm in either direction and 2.54 to 7.62 cm thick which were previously unavailable in the art with a sufficient strength to be commercially viable.

It is also very important that the thermal gradient across the part remain low. If the outside edge of the part is at a higher temperature and shrinks faster than the interior, tensile stress will develop at the outside edge and cracks will develop. By covering the part uniformly with setter tape, it is postulated that a more uniform thermal gradient is produced because the setter tape decreases the amount of convective heat transferred to the part. The amount of heat transferred to the part would be more limited by the thermal conductivity and radiative characteristics of the tape. The length and frequency of cracks along the outer edge of the part tend to be reduced when a layer of setter tape is used to cover the part.

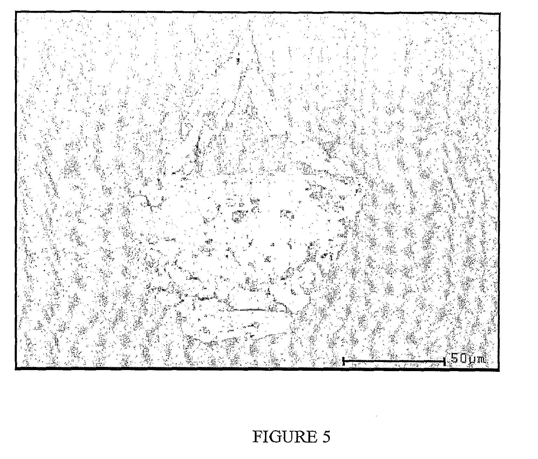

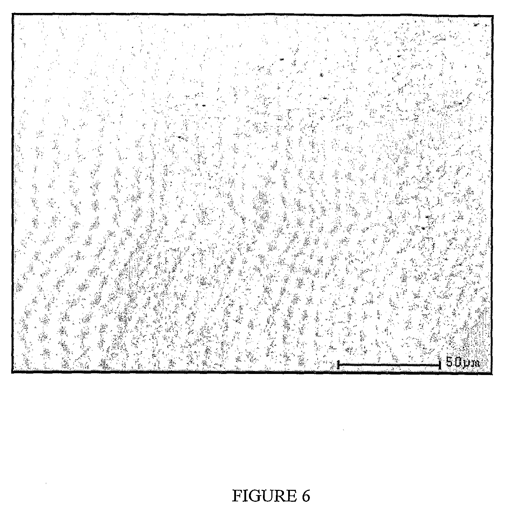

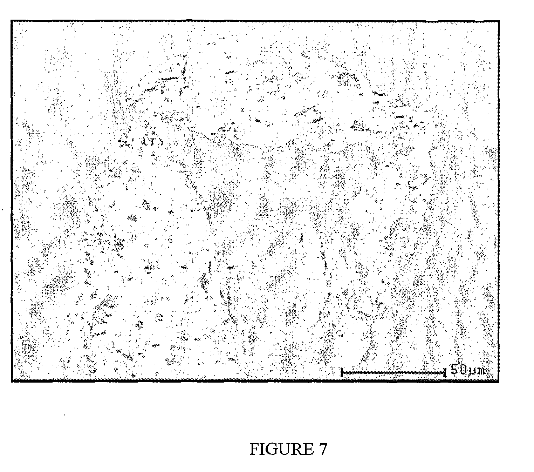

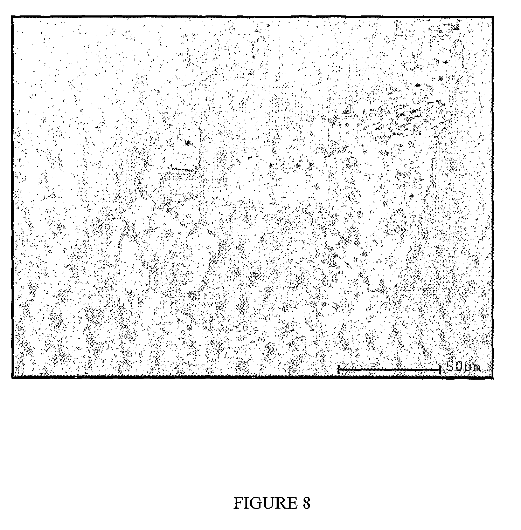

Figures 5 and 6 are cross-sections of ceramic foam made using quenched foam and two different alumina slurries, respectively (the only difference was the size of the coarse powder used to make the slurry). These are considered to be representative of the structure as a whole. Figures 5 and 6 show that the interface between the ceramic and where the polyurethane used to be is very smooth and continuous, suggesting the slurry coated the quenched polyurethane well. Figures 5 and 6 also show that the tips of the points in the tri-cornered pores tend to be coated with slurry, a necessity for robust foam; if these points protruded to the surface of the ceramic, a crack would result. Figures 7 and 8 were made from the same two slurries, but used zapped foam. The interfaces are very discontinuous, likely from air voids being trapped at the interface when coated with slurry. The points of the tri-cornered pores are not very well formed, so it is difficult to tell if they do not protrude to the surface of the ceramic. In either case, the poor uniformity displayed in Figures 7 and 8 indicate a high number of flaws that would tend to reduce the strength and robustness of the ceramic foam. This is reflected in compressive strength testing.

Three pairs of ceramic foam were tested via compressive strength. Three samples were made using quenched foam and three samples from zapped. Each pair of samples were formulated using a different version of alumina slurry; only the coarse component was changed. Alumina available as Aluchem AC17RG, Pechiney PBR and Pechiney AC44b6 were used in the test. The first slurry and the last two slurries were fired according to the same cycle on different days. Two statistical analyses were performed, one on the first pair of samples, and another on the two remaining pairs of samples. The T-ratios for the two tests were 10.11 and 13.76 for quenched foam versus zapped, indicating a significant positive influence from quenched foam. The data for each analysis is in Table 3.

**Table 3:**

| **Slurry Coarse Component** | **Foam** | **Density** | **Stress (psi)** |
|---|---|---|---|
| Aluchem AC17RG | quenched | 8.44(.25) | 261(24) |
| Aluchem AC17RG | zapped | 8.01(.43) | 187(33) |
| Pechiney Ac44b6 | quenched | 7.92(.43) | 169.4(20) |
| Pechiney Ac44b6 | zapped | 7.64(.31) | 119(16) |
| Pechiney PBR | quenched | 9.04(.38) | 134.4(21) |
| Pechiney PBR | zapped | 7.70(.76) | 99(21) |

Manufacture of fine pore foam via the sponge replication technique may lead to new applications outside of molten metal filtration such as precious metal filtration, catalyst supports and fluid filtration media, and biomedical implants for articles such as bone grafts.

The invention has been described with particular emphasis on the preferred embodiments. It would be realized from the teachings herein that other embodiments, alterations, and configurations could be employed without departing from the scope of the invention, which is more specifically set forth in the claims which are appended hereto.
A process for manufacturing a fine pore media comprising the steps of
forming a slurry comprising solvent, alumina and at least 0.01 wt % surfactant wherein said slurry has sufficiently low shear stress at high shear rates less than 12,000 dynes/cm² at a shear rate of 500/sec. such that it can enter organic foam with pore size equal to or less than 60 ppi;
impregnating an organic foam with said slurry to form an impregnated foam;
drying said impregnated foam to form a dry impregnated foam;
impregnating an organic foam with said slurry to form an impregnated foam;
drying said impregnated foam to form a dry impregnated foam;
heating said dry impregnated foam to remove said organic foam thereby forming a green ceramic; and
heating said green ceramic to a temperature sufficient to sinter said green ceramic.
The process for manufacturing a fine pore media above wherein said surfactant comprises Formula I: 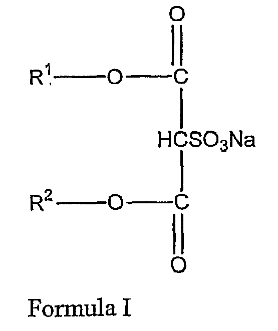 wherein R¹ and R² independently represent an alkyl of 1-8 carbons with the proviso that the number of carbons in R¹ and R² combined does not exceed 15.
The process for manufacturing a fine pore media above wherein wherein the number of carbons in R¹ and R² combined does not exceed 14.
The process for manufacturing a fine pore media above wherein the number of carbons in R¹ and R² combined does not exceed 13.
The process for manufacturing a fine pore media above wherein said slurry comprises no more than 1 wt% surfactant.
The process for manufacturing a fine pore media above ,wherein said slurry has a shear stress of less than 8000 dynes/cm² at a shear rate of 500/sec.
The process for manufacturing a fine pore media above wherein said filter has a density of no more than 10% of the theoretical density for a ceramic material of the same size.
The process for manufacturing a fine pore media a bove wherein said filter has a density of less than 10% of the theoretical density for a ceramic material of the same size and a compressive yield stress of at least 20 psi
The process for manufacturing a fine pore media above wherein said alumina is selected from sintered alumina and phosphate bonded alumina.
A fine pore filter prepared by the method above.
The process above wherein said foam is quenched foam.
A filter for filtering impurities from molten metal wherein said filter comprises ceramic and said filter has a density of less than 10% of the theoretical density for a ceramic material of the same size and a compressive yield stress of at least 20 psi.
The filter above wherein said filter has a density of no more than 8% of the theoretical density for a ceramic material of the same size.
The filter above wherein said filter has a density of no more than 6% of the theoretical density for a ceramic material of the same size.
The filter above wherein said filter has a compressive yield stress of at least 40 psi.
The filter above wherein said filter has a compressive yield stress of at least 60 psi.
The filter above wherein said filter has a compressive yield stress of at least 80 psi.
A filter above wherein said filter has a density of at least 12% of the theoretical density for a ceramic material of the same size and a compressive yield stress of at,least 90 psi.
A molten metal filtered by said filter a bove.
Aluminum filtered by said filter above.
A filter above comprising a pressure drop of less than 3 in/water at an air flow velocity of 285 ft/min. in a 4 inch diameter circular area.
A sintered alumina filter above having dimensions of at least about 38.1 x 38.1 x 2.54 cm to no larger than about 76.2 x 76.2 x 7.62 cm.

## Claims

1. A high porosity ceramic foam filter obtainable by a method comprising the steps of
forming a slurry;
impregnating an organic foam having a pore size equal to or less than 423 µm (60 ppi) with said slurry to form an impregnated foam;
drying said impregnated foam to form a dry impregnated foam;
heating said dry impregnated foam to remove said organic foam thereby forming a green ceramic; and
heating said green ceramic to a temperature sufficient to sinter said green ceramic
wherein said filter has a density of less than 10% of the theoretical density for a ceramic material of the same size and a compressive yield stress of at least 1.4065 kg/cm² (20 psi).

2. The high porosity ceramic foam filter of claim 1 having a density of no more than 8% of the theoretical density for a ceramic material of the same size.

3. The high porosity ceramic foam filter of claim 2 having a density of no more than 6% of the theoretical density for a ceramic material of the same size.

4. The high porosity ceramic foam filter of claim 1 having a compressive yield stress of at least 2.89 kg/cm² (40 psi).

5. The high porosity ceramic foam filter of claim 1 having a compressive yield stress of at least 4.22 kg/cm² (60 psi).

6. The high porosity ceramic foam filter of claim 1 having a compressive yield stress of at least 5.63 kg/cm² (80 psi).

7. The high porosity ceramic foam filter of any of claims 1-6 wherein said filter has a density of at least 12% of the theoretical density for a ceramic material of the same size and a compressive yield stress of at least 6.22 kg/cm² (90 psi).

8. A high porosity ceramic foam filter of any of claims 1-7 comprising a pressure drop of less than 76.2 mm/water (3 in/water) at an air flow velocity of 86.9 m/min. (285 ft/min.) in a 101.6 mm (4 inch) diameter circular area.

9. A high porosity ceramic foam filter of any of claims 1-8 having dimensions of at least 38.1 x 38.1 x 2.54 cm to no lager than 76.2 x 76.2 x 7.62 cm.

10. The high porosity ceramic foam filter of any of claims 1-9, wherein said slurry comprises water, alumina and at least 0.01 to no more than 0.5 wt% surfactant Formula I: 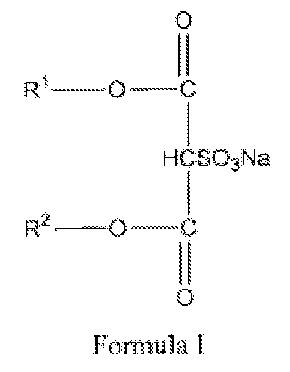 wherein R¹ and R² independently represent an alkyl of 1-8 carbons with the proviso that the number of carbons in R¹ and R² combined does not exceed 15.

11. The high porosity ceramic foam filter of claim 10, wherein the number of carbons in R¹ and R² combined does not exceed 14.

12. The high porosity ceramic foam filter of claim 10, wherein the number of carbons in R¹ and R² combined does not exceed 13.

13. The high porosity ceramic foam filter of claim 10, wherein said slurry has a shear stress of less than 8.16 g/cm² (8000 dynes/cm²) at a shear rate of 500/sec.

14. The high porosity ceramic foam filter of claim 10, wherein said filter has a density of no more than 10% of the theoretical density for a ceramic material of the same size.

15. The high porosity ceramic foam filter of claim 10, wherein said filter has a density of less than 10% of the theoretical density for a ceramic material of the same size and a compressive yield stress of at least 1.4065 kg/cm² (20 psi).

16. The high porosity ceramic foam filter of any of claims 10-15, wherein said alumina is selected from sintered alumina and phosphate bonded alumina.

17. The high porosity ceramic foam filter of any of claims 10-16, wherein said foam is quenched foam.

18. A filter for filtering impurities from molten metal wherein said filter comprises ceramic and said filter has a density of less than 10% of the theoretical density for a ceramic material of the same size and a compressive yield stress of at least 20 psi.
